# EUROPEAN PATENT SPECIFICATION

(11) **EP 0 742 134 B1**
(45) Date of publication and mention of the grant of the patent: **23.08.2000**
(21) Application number: 96303197.6
(22) Date of filing: 08.05.1996
(51) Int. Cl.: B62B 3/06, B60P 1/43

(54) **A self-propelled truck**
Selbstfahrender Wagen
Véhicule autopropulsé

(30) Priority: 09.05.1995 GB 9509364
(43) Date of publication of application: 13.11.1996
(73) Proprietor: BOSS GROUP LIMITED, Leighton Buzzard, Bedfordshire LU7 8SR (GB)
(72) Inventor: Ansell, Mark, Olney, Buckinghamshire MK46 5JS (GB); Hollister, James, Leighton Buzzard, Bedfordshire LU7 8LQ (GB); Cornwell, Andrew, Milton Keynes, Buckinghamshire MK17 0AG (GB)
(74) Representative: Richards, David John

(56) References cited:
- AU-B- 525 376
- CH-A- 351 507
- DE-U- 9 313 753
- FR-A- 2 679 510
- GB-A- 2 022 052

## Description

The present invention relates to a truck for transporting wheeled containers.

Wheeled containers of the kind used to transport mail carried in boxes and sacks have to be handled manually. Such containers are not adapted to be handled mechanically in a conventional manner using forks or a grabber mechanism. Lift trucks which have a liftable load-carrying carriage comprising forks are disclosed for example in GB-A-2285618 and GB-A-2293363. This requirement of manual handling not only limits the load which can be put in a single container but prohibits the combined movement of a plurality of containers. Accordingly, the present invention aims to provide a truck which can transport one or more such wheeled containers. Furthermore, such wheeled containers when fully-laden can weigh many hundreds of kilograms, typically 300kg, and are often used in loading/unloading areas of restricted size. Thus, it is a further aim of the present invention to provide a truck which allows the loading of containers in a manner which requires as little effort as possible on the part of the person loading the truck, and which can be loaded/unloaded in areas of restricted size. This is now of particular importance since the introduction of legislation which sets an upper limit on the loads which a person may encounter during normal duties.

There has been described in the prior art a road vehicle for loading and unloading other vehicles, such as that described in CH-A-351 507 and a trailer for transporting agricultural machines, such as that described in FR-A-2 679 510. However, these inventions do not address all the desirable features of a truck for transporting wheeled containers.

Accordingly, the present invention provides a self-propelled truck comprising a drive part which includes at least one steerable drive wheel, a load section which includes a load-carrying member, the load section being connected to the drive part so as to be adjustable in height between a loading position in which the load-carrying member is located on or close to the ground and a travelling position in which the load-carrying member is raised above the ground, at least one support wheel adjustably mounted to the load section, and a lifting assembly for raising and lowering the load section relative to the drive part and the at least one support wheel; characterised in that the load-carrying member is a platform and the load section further comprises a load restraint means, including a retaining cross-bar (36) which is locatable across a loading side and is hingably mounted and moveable between an open and a closed position, and the load section further comprises a loading ramp (32) which is hingably mounted to the load section on the loading side and is moveable between a closed substantially vertical position and a deployed substantially horizontal position, wherein the retaining cross-bar (36) is coupled to the loading ramp (32) by a link (46, 48) such that on raising the retaining cross-bar (36) to the open position, the loading ramp (32) is lowered at the same time to the deployed position and that on lowering the retaining cross-bar (36) to the closed position the loading ramp (32) is raised at the same time to the closed position.

Preferably, the at least one support wheel is pivotally mounted to said load section.

More preferably, each support wheel is supported at one end of a member which is pivotally connected to the load section.

In one embodiment, the at least one support wheel is located adjacent a transverse side of the load section remote from the drive part.

In an alternative embodiment, the support wheels are located adjacent to and on opposed longitudinal sides of the load section.

Preferably, the lifting assembly comprises at least one lifting unit and a linkage assembly coupled to the at least one support wheel, which linkage assembly cooperates with the drive part to raise and lower the load section under the action of the lifting unit.

Preferably, the linkage assembly comprises one or more linkages which each comprise a rocker, which is pivotally mounted to the drive part, and a push rod, one end of the push rod being connected to one arm of the end of the push rod being connected to one arm of the rocker and the other end of the push rod being coupled to a respective support wheel, the other arm of the rocker being coupled to the lifting unit.

Preferably, each lifting unit comprises a cylinder body and a rod, the cylinder body being fixedly mounted to one end of the drive part and the load section and the rod being fixedly mounted to the other end of the drive part and the load section.

In one embodiment, the loading ramp is mounted to a longitudinal side of the load section.

In an alternative embodiment, the loading ramp is mounted to a transverse side of the load section.

The use of a side-loading or end-loading truck depends upon the loading requirements and the layout of the loading/unloading areas in which the truck is to be used. Side-loading is less appropriate where there are manoeuvrability restrictions. However, side-loading does offer shorter load/unload cycle times.

Preferably, the load restraint means includes an upwardly extending frame assembly, the frame assembly being disposed around the sides of the load section other than a loading side.

Preferably, the diameter of the at least one support wheel is not less than the height of the platform above the ground when in the loading position.

The truck in accordance with the present invention, by virtue of having a platform which can be lowered onto or close to the ground, preferably onto the ground, offers easy loading since the height through which containers have to be raised on loading is kept to a minimum. Furthermore, by minimising this loading height, the width of a loading ramp can be kept to a minimum for any specific loading effort, thus allowing use in loading areas of restricted size.

Preferred embodiments of the present invention will now be described hereinbelow by way of example only with reference to the accompanying drawings, in which:
Figure 1 is a view of the loading side of a truck in accordance with a first embodiment of the present invention, shown in the raised configuration with loading side closed;
Figure 2 is a view of the loading side of the truck shown in Figure 1, shown in the lowered configuration with loading side open;
Figure 3 is a view of the non-loading side of the truck shown in Figure 1, shown in lowered configuration with loading side open;
Figure 4 is a rear end view of the truck shown in Figure 1, shown in the raised configuration with loading side closed;
Figure 5 is a front end view of the truck shown in Figure 1, shown in the raised configuration with loading side closed;
Figure 6 is an underside view of the truck shown in Figure 1;
Figure 7 is a part sectional view along line BB shown in Figure 6 of a linkage and wheel assembly in the raised configuration;
Figure 8 is a part sectional view along line BB shown in Figure 6 of a linkage and wheel assembly in the lowered configuration;
Figure 9 is a view of a first loading side of a truck in accordance with a second embodiment of the present invention, shown in the raised configuration with first loading side closed;
Figure 10 is a view of the first loading side of the truck shown in Figure 9, shown in the lowered configuration with the first loading side open;
Figure 11 is a rear end view of the truck shown in Figure 9, shown in the lowered configuration with first loading side open and second loading side closed;
Figure 12 is a side view of a truck in accordance with a third embodiment of the present invention, shown in the raised configuration with loading side closed;
Figure 13 is a side view of the truck shown in Figure 12, shown in the lowered configuration with loading side open; and
Figure 15 is a manoeuvrability diagram for a truck in accordance with the third embodiment of the present invention.

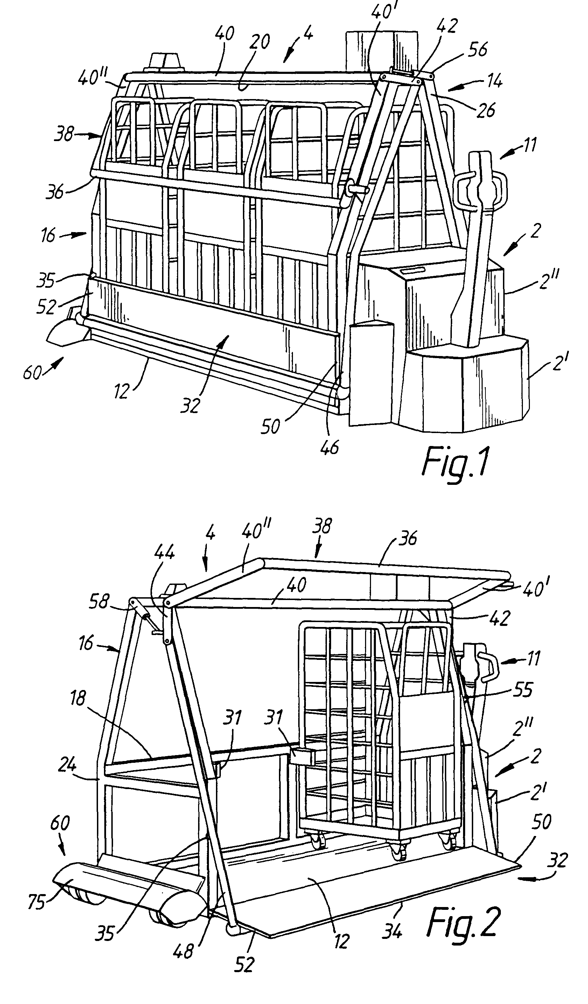

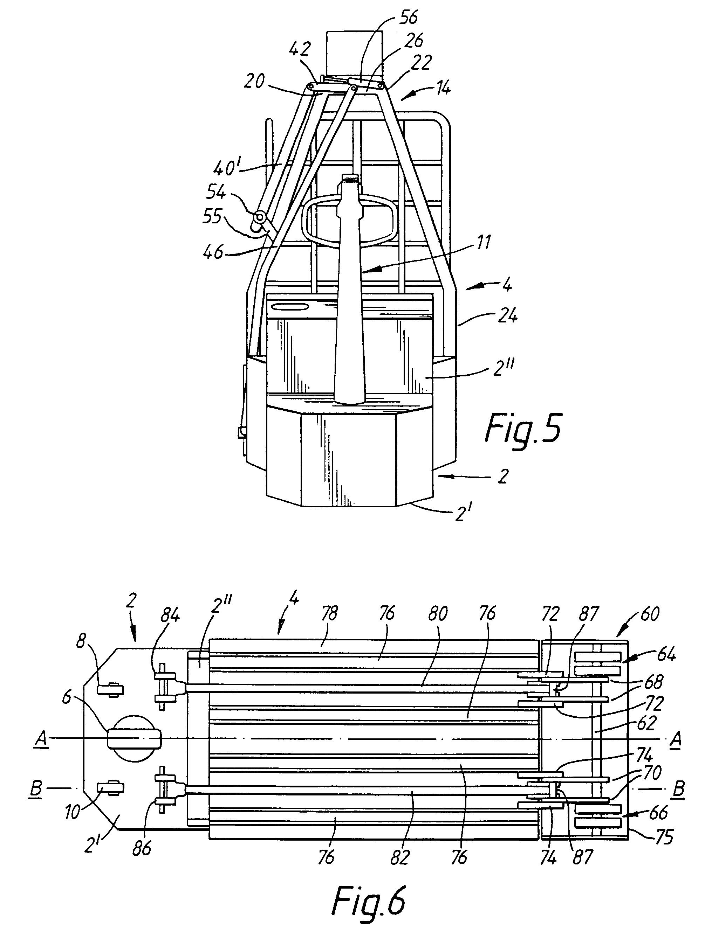

A truck in accordance with a first embodiment of the present invention is shown in Figures 1 to 6. The truck comprises a drive section 2 and a load section 4 in which containers are carried.

The drive section 2 comprises a drive part 2' which includes a steerable drive wheel 6 and an attachment part 2'' which is mounted fixedly to a transverse side of the load section 4. The attachment part 2'' is guidably engaged with the drive part 2' such that the load section 4 is adjustable in height between a lowered or loading position and a raised or travelling position. In the loading position the load section 4 is located on or close to the ground. The drive wheel 6 is driven by a motor and is preferably located on the longitudinal axis AA of the truck. On either side of the drive wheel 6 there are positioned casters 8,10. Steering of the truck is by means of a steering arm 11 which is coupled to the drive wheel 6. The steering arm 11 includes the controls for operating the truck and is movable between a raised position in which the steering arm 11 extends substantially vertically and a lowered position in which the steering arm 11 extends substantially horizontally. With the steering arm 11 in the raised position the truck is in a parked and braked mode and with the steering arm 11 in the lowered position the truck can be driven. An interlock is provided which prevents the truck from being driven other than when the steering arm 11 is in the lowered position. The drive part 2' further includes first and second lifting units, preferably hydraulic units, for effecting the raising and lowering of the load section 4. The lifting units are located on either side of the longitudinal axis AA of the truck.

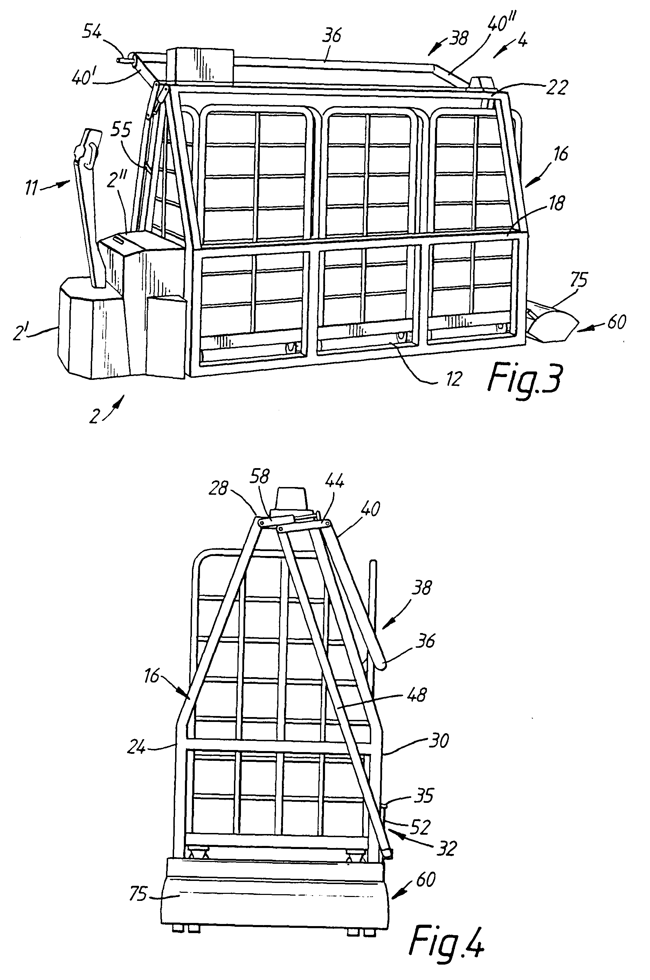

The load section 4 includes a platform 12 onto which containers can be located, and which is adjustable in height between a lowered or loading position and a raised or travelling position. In the loading position, as shown in Figures 2 and 3, the platform 12 preferably rests on the ground, thus providing a minimum height, typically 50mm, through which the containers must be raised on loading. In the travelling position, as shown in Figures 1, 4 and 5, the load section 4 is raised a distance above the ground, typically 120mm, in order to provide adequate clearance during transport over any uneven surfaces. In this embodiment the platform is flat and configured to carry three containers in the longitudinal direction. However, the platform may take any form which is suitable for supporting the containers, may be shaped or include guide rails so as to locate the containers in a correct position, and may be adapted to carry any number of containers in any configuration, for example six containers in a three by two configuration. The platform 12 is preferably covered with an anti-slip material.

A frame assembly, preferably of steel construction, is mounted fixedly to the platform 12. The frame assembly comprises upwardly extending main frame sections 14,16 which are mounted to the transverse sides of the platform 12 and longitudinally extending members 18,20,22 which interconnect one side 24 and upper parts 26,28 of the main frame sections 14,16. The other side 30 of the frame assembly, which has no interconnecting members, is the loading side of the truck. The frame assembly also includes guide plates 31 located on said one side 24 which act both to locate containers in a correct position on the platform 12 and to prevent longitudinal movement of the containers during travel. As an alternative, or in addition to the guide plates 31, spring-loaded webbing straps may be used as a means of restraining the movement of containers during travel.

A loading ramp 32 is hingably mounted to the longitudinal edge of the platform 12 on the loading side of the load section 4. The loading ramp 32 is movable between one of a closed and a deployed position. In the closed position, as shown in Figure 1, the loading ramp 12 extends substantially vertically and provides a means for preventing the transverse movement of containers, when loaded therein, beyond the longitudinal edge of the platform 12 on the loading side. In the deployed position, as shown in Figure 2, the free longitudinal edge 34 of the loading ramp 32 contacts the ground and thus acts to provide a shallow gradient for easy loading of containers onto the platform 12. The loading ramp 32 may be covered with an anti-slip material. A ramp retaining catch 35 is provided to lock the loading ramp 32 in the closed position when the platform 12 is raised. The ramp retaining catch 35 acts as a mechanical interlock to prevent the lowering of the loading ramp 32 when the platform 12 is raised, and is mechanically removed from engagement with the loading ramp 32 when the load section 4 is in the loading position.

The load section 4 further includes a retaining cross-bar 36 which can be positioned across the open side of the frame assembly further to prevent any transverse movement or toppling motion of loaded containers during travel. In this embodiment, the retaining cross-bar 36 is one longitudinal member of a rectangular frame section 38. The other longitudinal member 40 of the frame section 38 is hinged about the upper parts 26,28 of the main frame sections 14,16 of the frame assembly. Each of the transverse members 40', 40'' of the frame section 38 has an arm 42,44 fixedly mounted thereto at that end to which said other longitudinal member 40 is attached. The arms 42,44 extend substantially orthogonally to the transverse members 40',40''. The free end of each of said arms 42,44 is pivotably coupled by a respective link member 46,48 to a respective transverse edge 50,52 of the loading ramp 32, thereby allowing an operator both to raise the retaining cross-bar 36 to the open position and lower the loading ramp 32 to the deployed position at the same time, and to lower the retaining cross-bar 36 to the closed position and raise the loading ramp 32 to the closed position at the same time.

For ease of operation, a handle 54 is attached to the transverse edge 40' of the rectangular frame section 38 adjacent the drive section 2. A catch 55 is provided which is engagable with the handle 54 so as to ensure that the retaining cross-bar 36 is fixed in its lowered position during travel. Gas struts 56,58 fixed at one end to a respective main frame section 14,16 of the frame assembly and at the other end to a respective arm 42,44 are provided to slow, i.e. cushion, the fall of the loading ramp 32 as it approaches the ground. This arrangement not only reduces wear and damage to the loading ramp 32 and associated components but also reduces the risk of the loading ramp 32 falling on the foot of an operator without the operator having the opportunity to take preventative action.

In an alternative embodiment, particularly where two or more containers can be located across the transverse width of a platform, members may be omitted from both longitudinal sides of the frame assembly and loading ramps may be provided on both longitudinal sides of the load section 4. In such embodiments, longitudinally extending members may be located between central portions of the main frame sections 14,16.

The load section 4 further includes a wheeled assembly 60 which is pivotally mounted to the transverse side of the platform 12 remote from the drive section 2. The wheeled assembly 60 includes a horizontal axle 62 on which load wheels 64,66 are supported. The axle 62 has first and second pairs of spaced plates 68,70 attached thereto, which plates 68,70 are pivotally coupled at point X to the load section 4. Each pair of plates 68,70 is coupled to respective fixing parts 72,74 which extend beyond the transverse side of the platform 12. In this embodiment the platform 12 comprises channel sections 76 on which a flat sheet 78 is fixed, and it is to the channel sections 76 that the fixing parts 72,74 are mounted. The fixing parts 72,74 are mounted to opposed sides of adjacent channel sections 76. A bonnet 75 is provided to cover the axle 62, load wheels 64,66 and plates 68,70.

The assembly 60 is operably coupled to the drive part 2' by first and second push rods 80,82. Each of the push rods 80,82 is pivotally connected at one end to a respective one of said first and second pairs of plates 68,70 at point Y, and at the other end to an arm of a respective one of first and second rockers 84,86 pivotally mounted to the underside of the drive part 2'. The other arm of each of the rockers 84,86 is coupled to a rod of a respective one of the first and second lifting units; the cylinders of the lifting units being connected to the attachment part 2'' of the drive section 2. The end of each of the push rods 80,82 connected to the plates 68,70 is cranked so as to allow pivot point Y to be so distanced from pivot point X that sufficient leverage is provided to effect pivoting movement under load.

In use, when the lifting units exert a lifting force to the attachment part 2'' of the drive section 2, the rockers 84,86 rotate and the push rods 80,82 respond so as to draw the load wheels 64,66, which are pivotally mounted about the transverse end of the platform 12, in the longitudinal direction towards the drive section 2 and thereby raise the platform 12. The push rods 80,82 may be configured so as to raise the end of the load section 4 remote from the drive part 2' further above the ground than the end of the load section 4 adjacent the drive part 2', thereby providing increased ground clearance for a given lift by the lifting units.

In operation, the truck is driven to a loading/unloading area and the steering handle 11 raised to the parked position. The platform 12 is then lowered to the ground, whereupon the ramp retaining catch 35 is automatically disengaged from the loading ramp 32. An operator then manually disengages the cross-bar retaining catch 55 from the handle 54 and raises the retaining cross-bar 36 to the open position, thereby at the same time lowering the loading ramp 32 to the deployed position on the ground. Containers are then loaded onto or unloaded from the platform 12. When loading/unloading is completed the retaining cross-bar 36 is lowered to the closed position, thereby at the same time raising the loading ramp 32 to the closed position, and the cross-bar retaining catch 55 is engaged on the handle 54. The platform 12 is then raised to the travelling position, in which position the truck can be driven to another loading/unloading area and the operation repeated. Interlocks are provided to prevent the truck from being driven when the platform 12 is in the lowered position, and to prevent the platform 12 from being raised or lowered when either the steering arm 11 is in the lowered driving position or the loading ramp 32 is deployed.

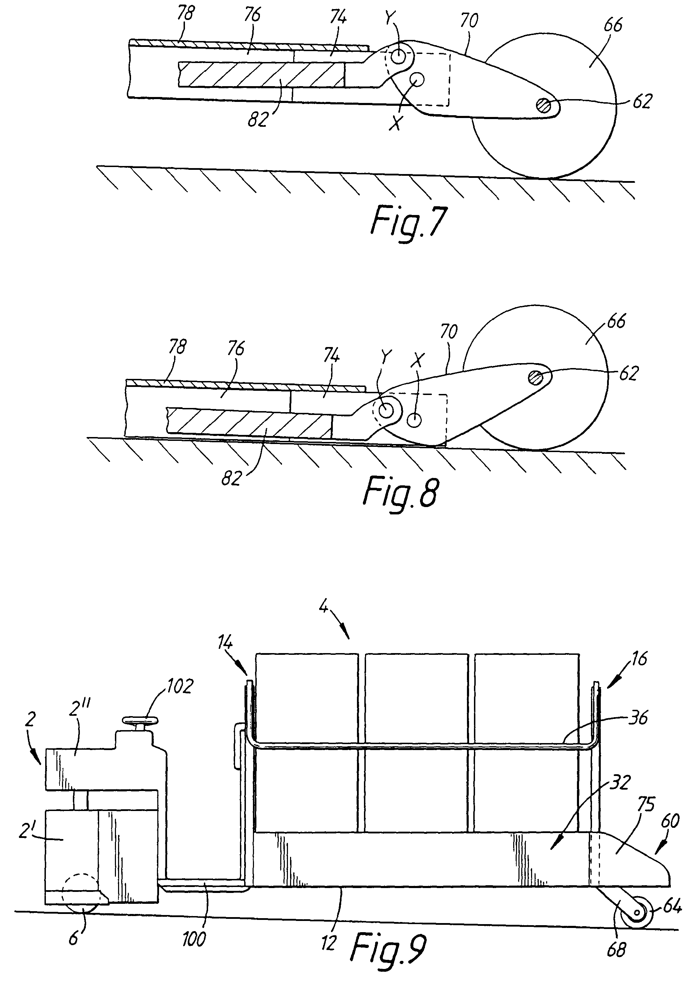

A truck in accordance with a second embodiment of the present invention is illustrated in Figures 9 to 11.

The truck is of broadly similar construction to the above described truck in accordance with the first embodiment of the present invention and differs essentially only in that the drive section 2 is a ride-on unit, and that the load section 4 has first and second loading sides.

The drive section 2 comprises a drive part 2' which includes the steerable drive wheel 6 and an attachment part 2'' which is mounted fixedly to a transverse end of the load section 4. The attachment part 2'' incorporates a footplate 100 on which an operator can stand and a steering wheel 102 which is coupled to the drive wheel 6 and by which the truck is steered. The footplate 100 may be covered with an anti-slip material. In the manner of the above-described first embodiment, the attachment part 2'' of the drive section 2 is guidably engaged with the drive part 2' such that the load section 4 is adjustable in height between a lowered or loading position and a raised or travelling position.

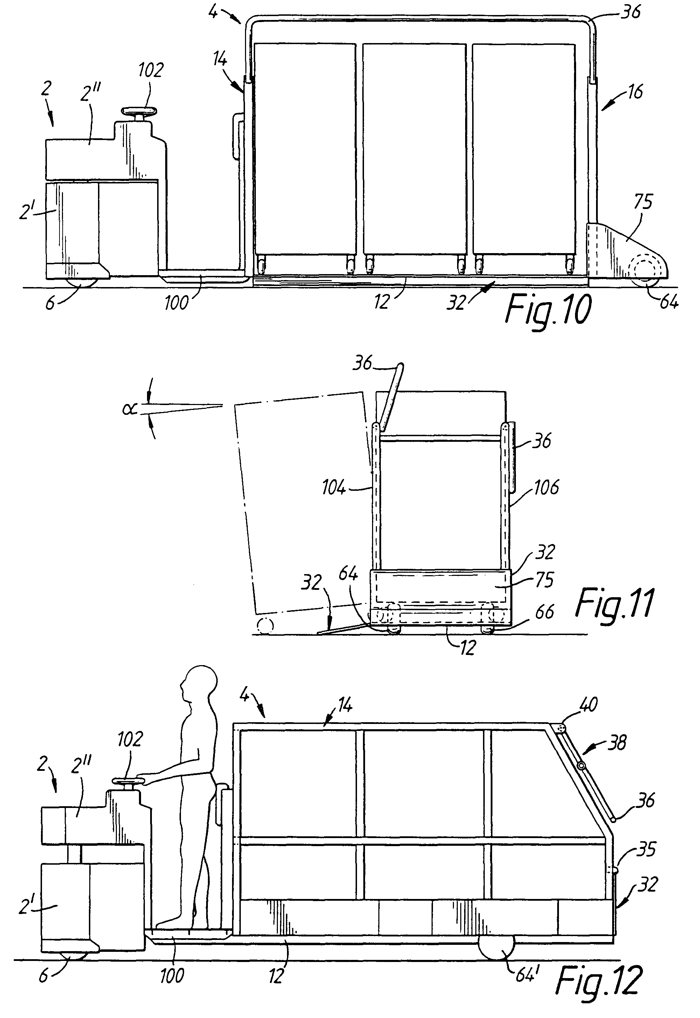

The load section 4 comprises first and second loading sides 104,106 provided at the longitudinal sides thereof. Each of the loading sides is provided with a loading ramp 32. In Figure 11, the first loading side 104 is shown in the open position and the second loading side 106 is shown in the closed position. In this embodiment the loading ramps 32 and retaining cross-bars 36 have to be moved separately. It will be understood, however, that the retaining cross-bar 36 and loading ramp 32 on each loading side may be connected by a link member in the manner of the first described embodiment so as to allow an operator both to raise the retaining cross-bar 36 to the open position and at the same time lower the loading ramp 32 to the deployed position, and to lower the retaining cross-bar 36 to the closed position and at the same time raise the loading ramp 32 to the closed position. Main frame sections 14,16 are fixed to the transverse sides of the platform 12. The load section 4 is adapted to carry three containers (as shown) in longitudinal arrangement.

The loading/unloading operation of the truck in accordance with this embodiment follows that for the first described embodiment, except that where the truck in accordance with the first embodiment of the present invention has a steering arm 11 which has to be raised to the parked position before the platform 12 can be raised or lowered, the truck in accordance with this embodiment, which has a steering wheel 102, must be put in a parked mode before raising or lowering of the platform 12 is possible.

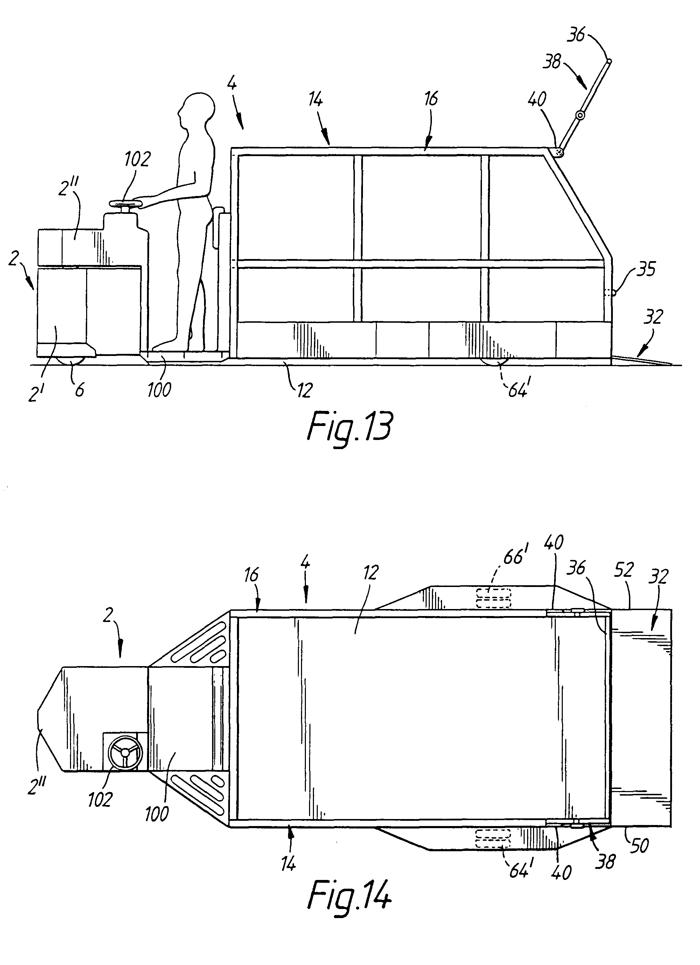

A truck in accordance with a third embodiment of the present invention is illustrated in Figures 12 to 15.

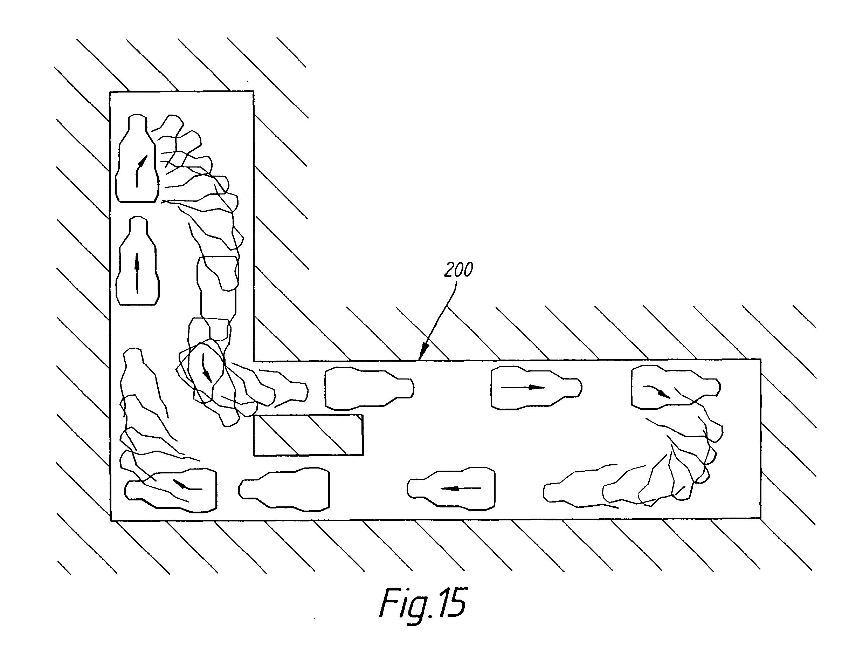

The truck is of broadly similar construction to the truck in accordance with the second embodiment of the present invention, and differs essentially only in that the load section 4 is end-loading. End-loading is particularly suitable for use in loading/unloading areas of restricted size. Figure 15 illustrates a manoeuvrability diagram for a truck in accordance with this embodiment in an operating area 200 of narrow width.

In this embodiment the loading side of the load section 4 is at the transverse side of the platform 12 remote from the drive section 2, and includes a loading ramp 32 and retaining cross-bar 36 assembly of a similar construction to that of the second described embodiment. A frame assembly is disposed around the sides of the platform 12, other than the loading side. Main frame sections 14,16 are fixed to the longitudinal sides of the platform 12 and interconnecting members are located therebetween at the transverse side of platform 12 adjacent the drive section 2. The load section 4 is adapted to carry six containers in a two by three arrangement, i.e. two containers in the transverse direction and three containers in the longitudinal direction.

The load wheels 64',66' are located adjacent to and on opposed longitudinal sides of the platform 12. Each of the load wheels 64',66' is supported on an axle which is pivotally connected to the platform 12; the wheels being coupled by linkages to the drive part 2' in the same manner as the above-described embodiments.

It will be understood by a person skilled in the art that the present invention is not restricted to the above-described embodiments but can be modified in many different ways within the scope of the appended claims.

## Claims

1. A self-propelled truck comprising a drive part (2') which includes at least one steerable drive wheel (6), a load section (4) which includes a load-carrying member, the load section (4) being connected to the drive part (2') so as to be adjustable in height between a loading position in which the load-carrying member is located on or close to the ground and a travelling position in which the load-carrying member is raised above the ground, at least one support wheel (64,66; 64',66') adjustably mounted to the load section (4), and a lifting assembly for raising and lowering the load section (4) relative to the drive part (2') and the at least one support wheel (64,66; 64',66'); characterised in that the load-carrying member is a platform (12) and the load section (4) further comprises a load restraint means, including a retaining cross-bar (36) which is locatable across a loading side and is hingably mounted and moveable between an open and a closed position, and the load section further comprises a loading ramp (32) which is hingably mounted to the load section on the loading side and is moveable between a closed substantially vertical position and a deployed substantially horizontal position, wherein the retaining cross-bar (36) is coupled to the loading ramp (32) by a link (46, 48) such that on raising the retaining cross-bar (36) to the open position, the loading ramp (32) is lowered at the same time to the deployed position and that on lowering the retaining cross-bar (36) to the closed position the loading ramp (32) is raised at the same time to the closed position.

2. A truck as defined in claim 1, wherein the at least one support wheel (64,66; 64',66') is pivotally mounted to the load section (4).

3. A truck as defined in claim 1 or 2, wherein the at least one support wheel (64,66) is located adjacent a transverse side of the load section (4) remote from the drive part (2').

4. A truck as defined in claim 1 or 2, wherein the support wheels (64',66') are located adjacent to and on opposed longitudinal sides of the load section (4).

5. A truck as defined in any one of claims 1 to 4, wherein the lifting assembly comprises at least one lifting unit and a linkage assembly coupled to the at least one support wheel (64,66; 64',66'), which linkage assembly cooperates with the drive part (2') to raise and lower the load section (4) under the action of the lifting unit.

6. A truck as defined in claim 5, wherein the linkage assembly comprises one or more linkages which each comprise a rocker (84,86), which is pivotally mounted to the drive part (2'), and a push rod (80,82), one end of the push rod (80,82) being connected to one arm of the rocker (84,86) and the other end of the push rod (80,82) being coupled to a respective support wheel (64,66; 64',66'), the other arm of the rocker (84,86) being coupled to the lifting unit.

7. A truck as defined in claim 5 or 6, wherein each lifting unit comprises a cylinder body and a rod, the cylinder body being fixedly mounted to one end of the drive part (2') and the load section (4) and the rod being fixedly mounted to the other end of the drive part (2') and the load section (4).

8. A truck as defined in any one of claims 1 to 7, wherein the load restraint means includes an upwardly extending frame assembly, the frame assembly being disposed around the sides of the load section (4) other than a loading side.

9. , A truck as defined in claim 8, wherein the loading ramp (32) is mounted to a longitudinal side of the load section (4) .

10. A truck as defined in claim 8, wherein the loading ramp (32) is mounted to a transverse side of the load section (4).

11. A truck as defined in any one of claims 1 to 10, wherein the diameter of the at least one support wheel (64,66;64',66') is not less than the height of the platform (12) above the ground when in the loading position.

## Patentansprüche

1. Selbstfahrender Transportwagen, der versehen ist mit einem Antriebsteil (2'), der wenigstens ein lenkbares Antriebsrad (6) besitzt, einem Lastabschnitt (4), der ein Lasttrageelement enthält, wobei der Lastabschnitt (4) mit dem Antriebsteil (2') so verbunden ist, daß er in der Höhe einstellbar ist zwischen einer Ladeposition, in der das lasttragende Element auf dem Boden oder dicht darüber angeordnet ist, und einer Fahrposition, in der das lasttragende Element über den Boden angehoben ist, wenigstens einem Unterstützungsrad (64, 66; 64', 66'), das einstellbar am Lastabschnitt (4) montiert ist, und einer Hubbaueinheit zum Anheben und Absenken des Lastabschnitts (4) relativ zum Antriebsteil (2') und zum wenigstens einen Unterstützungsrad (64, 66; 64', 66'); dadurch gekennzeichnet, daß das lasttragende Element eine Plattform (12) ist und der Lastabschnitt (4) ferner versehen ist mit einer Lasthalteeinrichtung, die eine Haltequerstange (36) enthält, die über einer Ladeseite angeordnet werden kann und schwenkbar montiert ist und zwischen einer geöffneten und einer geschlossenen Position bewegt werden kann, wobei der Lastabschnitt ferner eine Laderampe (32) umfaßt, die am Lastabschnitt an der Ladeseite angelenkt ist und zwischen einer geschlossenen, im wesentlichen vertikalen Position und einer ausgeklappten, im wesentlichen horizontalen Position bewegtwerden kann, wobei die Haltequerstange (36) mit der Laderampe (32) mittels einer Verbindung (46, 48) verbunden ist, so daß beim Anheben der Haltequerstange (36) in die geöffnete Position die Laderampe (32) gleichzeitig in die ausgeklappte Position abgesenkt wird, und beim Absenken der Haltequerstange (36) in die geschlossene Position die Laderampe (32) gleichzeitig in die geschlossene Position angehoben wird.

2. Transportwagen nach Anspruch 1, bei dem das wenigstens eine Unterstützungsrad (64, 66; 64', 66') am Lastabschnitt (4) angelenkt ist.

3. Transportwagen nach Anspruch 1 oder 2, bei dem das wenigstens eine Transportrad (64, 66) neben einer Querseite des Lastabschnitts (4) entfernt vom Antriebsteil (2') angeordnet ist.

4. Transportwagen nach Anspruch 1 oder 2, bei dem die Unterstützungsräder (64, 66; 64', 66') neben den gegenüberliegenden Seiten des Lastabschnitts (4) angeordnet sind.

5. Transportwagen nach irgendeinem der Ansprüche 1 bis 4, bei dem die Hubbaueinheit wenigstens eine Hubeinheit und eine Verbindungsbaueinheit umfaßt, die mit dem wenigstens einen Unterstützungsrad (64,66:64', 66') verbunden ist, wobei die Verbindungsbaueinheit mit dem Antriebsteil (2') zusammenwirkt, um den Lastabschnitt (4) unter der Wirkung der Hubeinheit anzuheben und abzusenken.

6. Transportwagen nach Anspruch 5, bei dem die Verbindungsbaueinheit eine oder mehrere Verbindungsvorrichtungen umfaßt, die jeweils einen Kniehebel (84,86), der am Antriebsteil (2') angelenkt ist, und eine Schubstange (80, 82) besitzen, wobei ein Ende der Schubstange (80, 82) mit einem Arm des Kniehebels (84, 86) verbunden ist und das andere Ende der Schubstange (80, 82) mit einem entsprechenden Unterstützungsrad (64, 66; 64', 66') verbunden ist, wobei der andere Arm des Kniehebels (84, 86) mit der Hubeinheit verbunden ist.

7. Transportwagen nach Anspruch 5 oder 6, bei dem jede Hubeinheit einen Zylinderkörper und eine Stange umfaßt, wobei der Zylinderkörper fest an einem Ende des Antriebsteils (2') und am Lastabschnitt (4) montiert ist und die Stange fest am anderen Ende des Antriebsteils (2') und am Lastabschnitt (4) montiert ist.

8. Transportwagen nach irgendeinem der Ansprüche 1 bis 7, bei dem die Lasthalteeinrichtung eine nach oben verlaufende Rahmenbaueinheit besitzt, die mit Ausnahme der Ladeseite um die Seiten des Lastabschnitts (4) angeordnet ist.

9. Transportwagen nach Anspruch 8, bei dem die Laderampe (32) an einer Längsseite des Lastabschnitts (4) montiert ist.

10. Transportwagen nach Anspruch 8, bei dem die Laderampe (32) an einer Querseite des Lastabschnitts (4) montiert ist.

11. Transportwagen nach irgendeinem der Ansprüche 1 bis 10, bei dem der Durchmesser des wenigstens einen Unterstützungsrades (64, 66; 64', 66') nicht kleiner ist als die Höhe der Plattform (12) über dem Boden, wenn sich diese in der Ladeposition befindet.

## Revendications

1. Chariot autopropulsé, comprenant une partie motrice (2'), qui comporte au moins une roue motrice orientable (6), une partie charge (4), qui comprend un élément porteur de charge, la partie charge (4) étant reliée à la partie motrice (2') de manière à pouvoir être réglée en hauteur entre une position de chargement, dans laquelle l'élément porteur de charge est situé sur le sol, ou de façon très proche de celui-ci, et une position de déplacement, dans laquelle l'élément porteur de charge est relevé au-dessus du sol, au moins une roue de support (64, 66 ; 64', 66'), montée de manière réglable sur la partie charge (4), et un ensemble de levage servant à lever et à abaisser la partie charge (4) par rapport à la partie entraînement (2') et par rapport à ladite au moins une roue de support (64, 66 ; 64', 66') ; caractérisé en ce que l'élément porteur de charge est une plate-forme (12) et en ce que la partie charge (4) comprend en outre un moyen de retenue de charge, comportant une barre transversale de retenue (36), qui peut être placée d'un bout à l'autre d'un côté de chargement et qui est montée de manière articulée et mobile entre une position ouverte et une position fermée, et en ce que la partie charge comprend en outre une rampe de chargement (32), qui est montée de manière articulée sur la partie charge du côté chargement et qui est mobile entre une position fermée, sensiblement verticale, et une position déployée, sensiblement horizontale, dans laquelle la barre transversale de retenue (36) est reliée à la rampe de chargement (32) par une bielle (46, 48) de telle manière que, lors de la montée de la barre transversale de retenue (36) vers sa position ouverte, la rampe de chargement (32) soit abaissée simultanément pour prendre la position déployée et que, lors de la descente de la barre transversale de retenue (36) vers sa position fermée, la rampe de chargement (32) soit remontée en même temps pour prendre sa position fermée.

2. Chariot selon la revendication 1, dans lequel ladite au moins une roue de support (64, 66 ; 64', 66') est montée de manière pivotante sur la partie charge (4).

3. Chariot selon la revendication 1 ou 2, dans lequel ladite au moins une roue de support (64, 66) est située de manière adjacente à un côté transversal de la partie charge (4), distant de la partie entraînement (2').

4. Chariot selon la revendication 1 ou 2, dans lequel les roues de support (64', 66') sont situées de manière adjacente aux côtés longitudinaux opposés de la partie charge (4) et sur ceux-ci.

5. Chariot selon l'une quelconque des revendications 1 à 4, dans lequel l'ensemble de levage comprend au moins une unité de levage et un ensemble formant tringlerie, relié à ladite au moins une roue de support (64, 66 ; 64', 66'), lequel ensemble formant tringlerie coopère avec la partie motrice (2') pour monter et descendre la partie charge (4) sous le contrôle de l'unité de levage.

6. Chariot selon la revendication 5, dans lequel l'ensemble formant tringlerie comprend une ou plusieurs tringlerie(s), qui comportent chacune un balancier (84, 86), qui est monté de manière pivotante sur la partie entraînement (2'), et une tige de poussée (80, 82), une extrémité de la tige de poussée (80, 82) étant reliée à un bras du balancier (84, 86) tandis que l'autre extrémité de la tige de poussée (80, 82) est reliée à une roue de support (64, 66 ; 64', 66') correspondante, l'autre bras du balancier (84, 86) étant relié à l'unité de levage.

7. Chariot selon la revendication 5 ou 6, dans lequel chaque unité de levage comprend un corps de cylindre et une tige, le corps de cylindre étant solidement monté sur une extrémité de la partie motrice (2') et de la partie charge (4), et la tige étant solidement montée sur l'autre extrémité de la partie motrice (2') et de la partie charge (4) .

8. Chariot selon l'une quelconque des revendications 1 à 7, dans lequel le moyen de retenue de charge comprend un ensemble formant bâti s'étendant vers le haut, l'ensemble formant bâti étant disposé autour des côtés de la partie charge (4), autres qu'un côté de chargement.

9. Chariot selon la revendication 8, dans lequel la rampe de chargement (32) est montée sur un côté longitudinal de la partie charge (4).

10. Chariot selon la revendication 8, dans lequel la rampe de chargement (32) est montée sur un côté transversal de la partie charge (4).

11. Chariot selon l'une quelconque des revendications 1 à 10, dans lequel le diamètre de ladite au moins une roue de support (64, 66 ; 64', 66') n'est pas inférieur à la hauteur de la plate-forme (12) au-dessus du sol, dans la position de chargement.
